# EUROPEAN PATENT APPLICATION

(11) **EP 2 472 159 A1**
(43) Date of publication of application: **04.07.2012**
(21) Application number: 10016168.6
(22) Date of filing: 29.12.2010
(51) Int. Cl.: F16L 23/18, F16J 15/12

(54) **Flange seal**

(71) Applicant: Pamargan Products Limited, Newtown, Powys SY16 4LE (GB)
(72) Inventor: Turner, Keith, Newton, Powys SY16 3HL (GB); Jones, Iwan, Newton SY16 2QL (GB)
(74) Representative: Corret, Hélène

(57) **Abstract**

A seal for coupling between two flanges comprising :
- an annular gasket (1) of elastically deformable material presenting an axis of revolution and a transverse axis and an outer ring (2) of a non deformable material, the annular gasket comprising, in cross-section,
- an inside face (10) facing towards the axis of revolution,
- an outside face (11) opposite therefrom, connecting the gasket to the outer ring and
- two side faces (12, 13) for bearing against a flange sealing surface, said side faces interconnecting the inside and outside faces, and each side face including at least two compressible lobes, an outer lobe (121, 131) close to the outside face (11) and an inner lobe (120, 130) close to the inside face (10) so as to provide at least two distinct sealing zones when the seal is mounted between the flanges.

## Description

The present invention relates to flange technology and more specifically to sealing systems for flanges.

There are several standards for flanges. The sealing gasket according to the invention may suit existing ASME / ANSI B16-5 flanges (US standard) or flanges defined by other standards such as JIS B2220 5K-30 K (Japanese standard), BS 4504 (UK standard) or AS 2129 (Australian standard).

The seal is positioned between two flanges which are connected by means of bolts, and the seal is thus compressed between the flanges. The mounted flanges provide a central passage for a media, such a fluid, which applies a pressure on the seal.

Two types of seals are most commonly used in such flanges: spiral-wound gaskets and flat faced gaskets.

A spiral-wound gasket is made of alternate plies of V-preformed hoop and soft filler that are tightly and spirally wound together. The metal winding around the entire inside and outside circumferences of the gasket is spot welded.

Normal practice is to reinforce the inside and outside diameters with several plies of the metal winding with filler being introduced. According to the need of the mating flange, the gasket is provided with an outer ring, an inner ring or both outer and inner rings.

The outer ring serves as a compression stop, anti-blowout device, which properly centres the gasket on the flange. The inner ring acts as a compression stop and is used to fill the annular space between the flange bore and the gasket inside diameter to minimize turbulence of process fluids and erosion of flanges faces.

Spiral wound gaskets are affected by poor installation, vibration and damage before installation.

Indeed, the compression and exact moulding of the filler and windings forms the seal. If this is damaged by knocking against a harder surface, bending of the windings, or breaking the spot weld holding the gasket together, this will result in seal failure and the potential of windings entering the pipe network and damaging valves pumps and other equipment. The soft metal covering the windings can also be damaged and indented by a finger nail.

Moreover, a spiral-wound gasket requires accurate torque on the bolts which varies depending on the manufacturer of the seal.

It must be pointed out that currently approximatively 10% of bolted flanges fail and this is accepted as the norm.

Finally, spiral wound gaskets are not reusable since the compression of the seal leads to their permanent deformation.

Flat faced gasket are for flat faced flanges, low pressure systems and where strict hygiene is a concern.

They are made from natural products such a cork, rubber or synthetic composites designed to replace asbestos where temperature is an issue.

Flat faced gaskets are designed only for low pressure applications and as temporary joints. Moreover, they are not reusable.

The object of the invention is to provide a seal for coupling between two flanges which avoids these drawbacks.

More precisely, the seal according to the invention is designed to provide a large sealing area and thus limiting the risks of failure, to avoid damage prior to installation, to be easily mounted, to be capable of operating in both high and low pressure applications and to be reusable.

The invention provides a seal for coupling between two flanges comprising an annular gasket of elastically deformable material presenting an axis of revolution and a transverse axis and an outer ring of a non deformable material, the annular gasket comprising, in cross-section,
- an inside face facing towards the axis of revolution,
- an outside face opposite therefrom, connecting the gasket to the outer ring and
- two side faces for bearing against a flange sealing surface, said side faces interconnecting the inside and outside faces, and each side face including at least two compressible lobes, an outer lobe close to the outside face and an inner lobe close to the inside face, so as to provide at least two distinct sealing zones when the seal is mounted between the flanges.

Indeed, when the seal is mounted between two flanges, the gasket is compressed and the elastically deformable material flows across the side faces to form two distinct sealing zones when the gasket presents two lobes on each side face: a primary sealing zone which is exposed to the media passing through the flanges and a secondary sealing zone, which forms a back up sealing means.

The latter reduces the risks of failure of the seal.

In particular embodiments,
- The seal comprises a central zone of a predetermined thickness and width.
   - The inner lobe of a side face is interconnected to the inside face by means of a substantially planar and sloping face.
   - The inside and outside faces are substantially perpendicular to a transverse axis of the seal.
   - The thickness of the inner lobe is higher than the thickness of the outer lobe.
   - The annular gasket is symmetrical relative to the medial transverse axis.
   - The outer ring is replaced with an inner ring connected to the annular gasket by the inside face of said gasket.
   - The outer ring or the inner ring are made of a metallic substance or of a composite type material.

Other characteristics and advantages of the invention will appear from the following description relating to a detailed and not limiting example and given with reference to the accompanying figures, which show, respectively:
- Figure 1, an axial section view of a seal according to the invention, prior to installation between two flanges,
- Figure 2, an enlarged view of part of Figure 1,
- Figure 3, a half plan view of the seal according to Figure 1, after installation between two flanges,
- Figure 4, a partial axial section of the seal illustrated in Figure 3.

In the description below, the following terms are defined as follows:
- annular gasket: a gasket in the form of a solid of revolution about an axis of revolution located at the center of the gasket,
- axis of revolution (R): axis of revolution of the gasket,
- transverse axis: axis perpendicular to the axis of revolution,
- medial transverse axis (T) of the gasket: the transverse axis which is located in the middle of the gasket,
- cross section: a section containing a transverse axis and the axis of revolution,
- the thickness of a gasket part is the height of said part in the direction of the axis of revolution, when the gasket is at rest or not in use,
- the width of a gasket part is the length of said part in the direction of a transverse axis, when the gasket is at rest or not in use.

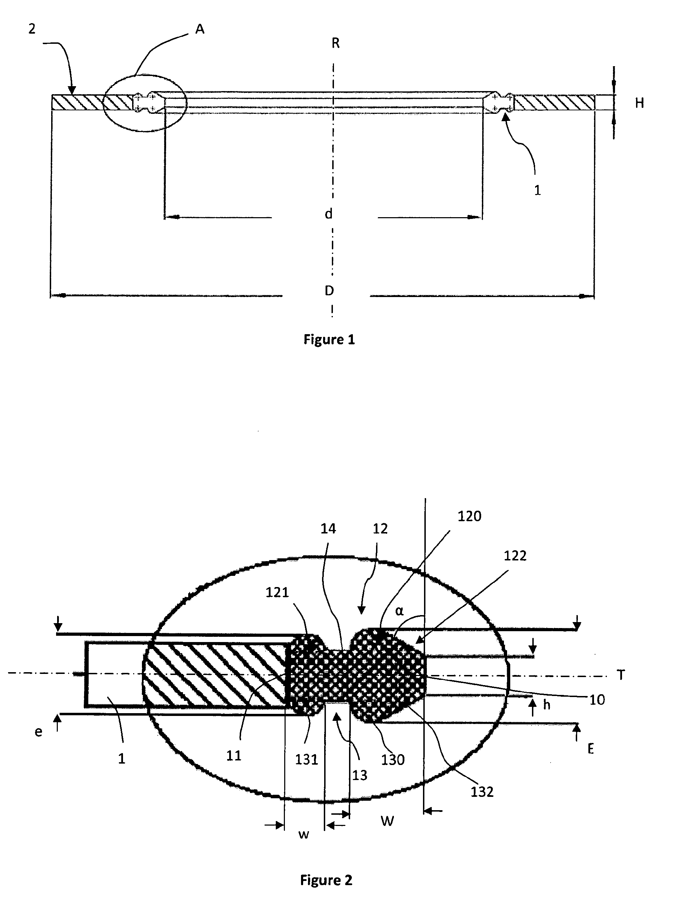

An embodiment of a flange seal according to the invention, shown in figure 1, comprises an annular gasket 1 and an outer ring 2, both of revolution about the axis of revolution R.

The annular gasket is made of a material which is elastically deformable, such as a preformed PTFE, an elastomeric material like a HNBR, NBR or a FKM, or other elastomeric materials which will suit the media (gas/Fluid) in the system.

An example of a HNBR can have the following characteristics: hardness Shore A: 83; hardness IRHD: 82; tensile strength: 22 MPa; elongation: 250%; compression set (72h at 150° C): 30%; brittle point: - 40° C and TR10: - 20° C.

An example of a NBR can have the following characteristics: hardness Shore A: 82; hardness IRHD: 83; tensile strength: 16 MPa; elongation: 241%; compression set (24h at 100° C): 9%; brittle point: -30° C and TR10: -25° C.

An example of a FKM can have the following characteristics: hardness Shore A: 81; hardness IRHD: 80; tensile strength: 14 MPa; elongation: 165%; compression set (24h at 200° C): 18%; brittle point: -23° C and TR10: -15° C.

The type of PTFE that would be used in this application will have similar sealing flow characteristics as compared to the elastomeric material, on assembly.

The outer ring 2 is made of a metallic substance, such as stainless steel, or a composite type material. The advantage of the latter is to reduce weight and cost.

At this stage, it can be noted that the risks of damaging a seal according to the invention are low compared to a spiral-wound gasket. Indeed, the seal would have been severely manhandled to bend the stainless steel ring or to tear or deform the annular gasket.

The dimensions of the flange seal are in accordance with the dimensions of the flanges which are commonly defined by national or international standards.

For instance, a seal for a flange having a nominal size of ½" (ASME B16.5 150#) will have an overall diameter (D) of 48 mm and an internal diameter (d) of 27 mm, a seal for a flange size of 4" (ASME B16.5 300 #) will have an overall diameter (D) of 181 mm and an internal diameter (d) of 121 mm and a seal for a flange size of 10" (ASME B16.5 400#) will have an overall diameter (D) of 359 mm and an internal diameter (d) of 281 mm.

Moreover, the purpose of the outer ring 2 is to enable the annular gasket to be centralized on the flanges, to prevent over tightening of the bolts (compression stop) and to hold the elastomer in the sealing area preventing it being extruded back along the flange mating faces through pressure (blow-out preventer). Therefore, the tensile strength of the outer ring material is directly proportional to the pressure that the outer ring has to bear and which is applied by the fluid flowing through the bolted flanges.

The minimum ultimate tensile strength of the outer ring material is 400 N/mm².

The embodiment of figures 1 and 2 is intended for an application where the pressure is from the inside of the seal. An outer ring is thus needed to provide a support for the annular gasket. Otherwise, high pressure would eventually extrude the material of the gasket and a leak path would occur.

Reference is now made to figure 2 which shows an enlarged view of detail A of figure 1.

The annular gasket 1 comprises an inside face 10 facing towards the axis of revolution R and an outside face 11 opposite to the inside face. The latter connects the annular gasket 1 to the outer ring 1, the elastomer being bonded to the outer ring using a generic chemical process.

The gasket 1 also comprises two side faces 12, 13 interconnecting the outside and the inside faces 10, 11.

Each side face 12, 13 comprises two compressible lobes 120, 121; 130, 131. There may be applications were more than two lobes are required. In the embodiment shown in figures 1 and 2, the annular gasket is symmetrical relative to the medial transverse axis T.

An inner lobe 120, 130 is close to the inside face 10 of the gasket. In the embodiment shown in figures 1 and 2, the inner lobe is linked to the inside face by means of a planar and sloping face 122, 132.

The angle α of the sloping face 122 or 132 with regard to the axis of the revolution R (or the inside face 10) is comprised between 55° and 65°, and for instance about 60°, but may be outside of these standard limits, dependant on the type of sealing element material and hardness defined for the application.

The sloping face allows the gasket to steadily fill the voids in the flange face rather push it through.

An outer lobe 121, 131 is close to the outside face 11 of the gasket.

The inside face 10 and outside face 11 are substantially cylindrical and centered on the axis of revolution R.

The annular gasket 1 comprises a central portion 14 between the inner lobes and the outer lobes, creating a gap between the lobes.

The height of the outside face 11 is substantially equal to the height H of the outer ring 1.

The values given below correspond to a specific example and the invention is not limited to that example.

The height h of the inside face 10 is comprised between 1,8 and 2,2 mm, for instance about 2 mm and the height H of the outer ring 1 is about 3 mm.

The standard ratio for E is 2 times larger than e, but may vary dependant on material type.

In this specific example, the thickness E of the inner lobe 120, 130 is about 4,4 mm, for instance comprised between 4,2 and 4,6 mm.

The thickness e of the outer lobe 121, 131 is about 4 mm, for instance comprised between 3,8 and 4,2 mm.

The thickness e of the outer lobe is inferior to the thickness E of the inner lobe, as it has to flow into the gap between the two lobes without creating overfill conditions.

Therefore, the ratio E/e is superior to 1 and typically ranges to 2.

The central portion has a predetermined thickness and width. Its thickness is such that the central portion is set back from the surface of the outer ring. For instance, it is about 0,3 mm below the surface of the outer ring. The minimal width of the central portion is 0,75 mm.

The width w of the outer lobe 121, 131 is comprised between 1,8 and 2,2 mm, for instance about 2 mm.

The width W of the inner lobe 120, 130 is comprised between 3,3 and 3,7 mm, for instance about 3,50 mm.

Moreover, in the illustrated embodiment, the radius of curvature of the outer lobe 121, 131 is about 1 mm and the radius of curvature of the inner lobe 120, 130 is about 1 mm, but may vary from these standard dimensions dependant on sealing material type and application.

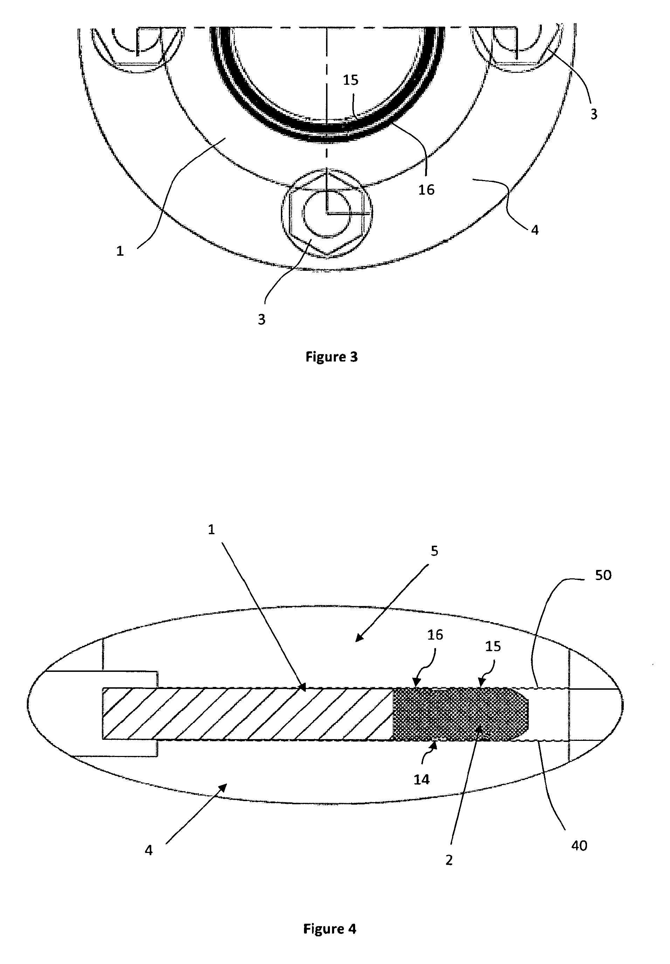

Figures 3 and 4 show a flange seal according to figure 1 squeezed axially between two flanges 4, 5 connected by bolts 3.

A media can flow through the assembly at a pressure P_{F}. The assembly is placed in an outside medium at a pressure P_{E}. The fluid pressure P_{F} is higher than the pressure P_{E} of the outside medium.

The sealing faces 40 and 50 of the flanges 4 and 5 have a V profile cut into all of the sealing area.

Most flanges have V grooves cut into them. As it will be explained, a good sealing will be obtained with seal according to the invention in association with flanges having a grooved finish.

Moreover, the seal according to the invention will also seal flanges having smooth finishes as, unlike a spiral wound gasket, it does not require the grip of a machined face to be activated.

Figure 4 shows that when the annular gasket 1 is compressed between the flanges 4, 5, the lobes deform and flow across each flange seal face 40, 50 to form two distinct sealing zones 15 and 16, spaced apart by the central portion 14.

The inner sealing zone 15 is a primary sealing zone which is subject to the full pressure of the system and exposed to the media contained within the system and flowing through the flanges.

The outer sealing zone 16 is a secondary sealing zone which forms a back up sealing zone.

Therefore, the flange seal according to the invention is a multi sealing system compared to seals having an O or an oval section which have no secondary back up sealing zone.

The shape of the profile coupled with the assembly compression loading allows the elastomer to flow into V profile. In this regard, the symmetry of the gasket allows the sealing element to flow into the concentric grooves on the raised face of the flange forming a labyrinth seal. The elastomer also fills any damage portions.

Indeed, if the flange has been knocked or cleaned too vigorously the pre-machined grooves which are normally 0.250 microns deep can be damaged giving an uneven finish. The gasket elastomer will take up these anomalies more than a graphite or PTFE filler in a spiral-wound gasket. This is an advantage of the seal according to the invention over a spiral-wound gasket.

The elasticity of the gasket material enables a repositioning of the gasket without any adverse affect. This has another advantage that the torque loading required to fully activate the seal is greatly reduced in comparison to the current metal sealing.

The assembly process for the current spiral-wound gasket is very precise and requires some experience for the fitter to install because inaccurate torque on the bolts can create a leak path.

By contrast, with the seal according to the invention, the ability of the element to flow across the sealing face with minimal torque, allows the fitter to "feel" when the metal support ring is in contact with the flange faces.

The design for the flange seal according to the invention does not anticipate the need for a supporting inner ring for the annular gasket, because the outer ring gives the control for compression loading of the gasket. Some 90% of the existing metal seals do contain an inner ring, and the function is to increase the stability particularly in larger flange sizes. It also acts against cavitational vortex which is when the pressure within the pipe system fluctuates dramatically. This suction and disturbance of the medium has a tendency to draw the windings of the spiral wound gasket into the pipe by breaking the spot weld holding it together leading to gasket failure as it unravels. This issue is not a problem for the flange seal according to the invention.

The advantages of the flange seal according to invention appear from the previous description: large sealing area, back up sealing zone, ease of installation, blow-out preventer, compression stop, no damage to the seal prior to installation, seal flow to damaged sealing area, possible reuse.

Moreover, the flange seal according to invention cannot be damaged by electrolytic corrosion, compared to spiral-wound gaskets which include metal parts.

It must be pointed out that the flange seal previously described is intended for an application where the pressure is from the inside of the seal. In other applications where the pressure P_{E} of the outside medium is greater than fluid pressure P_{F}, the outer ring will be replaced by an inner ring.

The references numerals are introduced in the claims to make their understanding easier and will not limit the scope of the claims.

## Claims

1. A seal for coupling between two flanges comprising :
- an annular gasket (1) of elastically deformable material presenting an axis of revolution and a transverse axis and an outer ring (2) of a non deformable material, the annular gasket comprising, in cross-section,
- an inside face (10) facing towards the axis of revolution,
- an outside face (11) opposite therefrom, connecting the gasket to the outer ring and
- two side faces (12, 13) for bearing against a flange sealing surface, said side faces interconnecting the inside and outside faces, and each side face including at least two compressible lobes, an outer lobe (121, 131) close to the outside face (11) and an inner lobe (120, 130) close to the inside face (10) so as to provide at least two distinct sealing zones when the seal is mounted between the flanges.

2. A seal according to claim 1 wherein the annular gasket comprises a central portion (14) of a predetermined thickness and width.

3. A seal according to claim 1 or 2, wherein the inner lobe (120, 130) of a side face is interconnected to the inside face by means of a substantially planar and sloping face (122, 132).

4. A seal according to one of the preceding claims, wherein the inside and outside faces (10, 11) are substantially perpendicular to a transverse axis of the seal.

5. A seal according to one of the preceding claims, wherein the thickness (E) of the inner lobe is higher than the thickness (e) of the outer lobe.

6. A seal according to one of the preceding claims, wherein the annular gasket (1) is symmetrical relative to the medial transverse axis (T).

7. A seal according to one of the preceding claims, wherein the outer ring (1) is replaced with an inner ring connected to the annular gasket by the inside face of said gasket.

8. A seal according to claim 7, wherein the outer ring or the inner ring are made of a metallic substance or of a composite type material.
